# EUROPÄISCHE PATENTSCHRIFT

(11) **EP 1 120 674 B1**
(45) Veröffentlichungstag und Bekanntmachung des Hinweises auf die Patenterteilung: **11.04.2007**
(21) Anmeldenummer: 01101748.0
(22) Anmeldetag: 25.01.2001
(51) Int. Cl.: G02B 6/44

(54) **Schaltfeld zur Verbindung von Glasfaserkabeln**
Connection field for connection of optical fibre glas cables
Réseau de connexion pour connexion des câbles à fibres optique

(30) Priorität: 28.01.2000 DE 10003698
(43) Veröffentlichungstag der Anmeldung: 01.08.2001
(73) Patentinhaber: CCS Technology, Inc., Wilmington, DE 19803 (US)
(72) Erfinder: Fröhlich, Franz, 58091 Hagen (DE); Iwanek, Waldemar, 44369 Dortmund (DE); Maier, Guido, 58093 Hagen (DE)
(74) Vertreter: Sturm, Christoph

(56) Entgegenhaltungen:
- WO-A-99/27404
- DE-A- 3 527 914
- US-A- 4 776 662
- US-A- 4 971 421
- US-A- 5 167 001
- US-A- 5 613 030
- US-A- 5 715 348
- US-A- 5 913 006

## Beschreibung

Die Erfindung betrifft ein Schaltfeld zur Verbindung von Glasfaserkabeln nach dem Oberbegriff des Anspruchs 1.

Die Tendenz zum Einsatz von Glasfaserkabeln in der Kommunikation, beispielsweise bei der Übermittlung von Sprach- und Bilddaten, führt zu immer komplexeren Schaltanlagen. Diesen Schaltanlagen sind eine Mehrzahl Glasfaserverteilgestelle angeordnet, die zu ihrem überwiegenden Teil aus Schaltfeldern beziehungsweise Patchfeldern bestehen. In diesen Schaltfeldern enden die externen Kabel und werden über Glasfaser-Schaltkabel, sogenannte Patchkabel, untereinander verbunden. Die Schaltkabel sind Kabel mit einer oder mehreren von einem Kabelmantel und von Zugabfangelementen umgebenen Glasfasern, die an beiden Seiten eine Kupplungsvorrichtung, beispielsweise einen Stecker,aufweisen. Die Schaltfelder sind mit einer Vielzahl von Kupplungen ausgestaltet, die die Verbindung der externen Glasfaserkabel und der Schaltkabel ermöglichen. Ein derartiges Schaltfeld ist beispielsweise aus US-4971421 bekannt.

Die Schaltkabel haben meist eine bestimmte Länge, die es gestattet, auch die entferntesten Kupplungen des Schaltfeldes untereinander zu verbinden. Dies führt aber zwangsläufig dazu, dass unterschiedliche Überlängen der Schaltkabel entstehen, die in dem Glasfaserverteilgestell unterzubringen sind.

Bisher war es üblich, die Überschusslängen der Schaltkabel in sogenannten Patchcord-Schubladen vorzusehen. Dies sind einschiebbare Wannen, die in dem Glasfaserverteilgestell unter einem Teil eines Schaltfeldes aufgenommen sind.

Da bei Glasfaserkabeln ein Mindestbiegeradius nicht unterschritten werden sollte, um unnötige Dämpfung der Signale zu vermeiden, haben diese Patchcord-Schubladen eine beachtliche Höhe. Eine derartige Patchcord-Schublade ist beispielsweise in der US-Patentschrift US-5613030 offenbart.

Des Weiteren zeigt das US-Patent US-5167001 die Möglichkeit, das Schaltfeld nicht über die gesamte Breite des Glasfaserverteilgestells auszubilden, so dass neben dem eigentlichen Schaltfeld noch genügend Platz ist, um die Überschusslängen der Glasfaserkabel auf einer Trommel aufzunehmen. Dabei liegen die Überschusslängen in Form von Schleifen in der Ebene des Schaltfeldes. Der Nachteil dieser Lösung besteht darin, dass für das eigentliche Schaltfeld nur eine sehr geringe Fläche zur Verfügung steht, was die Verschaltung erschwert und die Anordnung unübersichtlich macht.

Die WO 99/27404 offenbart einen Gestellrahmen, wobei im Gestellrahmen Baugruppenträger mit optischen Kupplungen angeordnet sind. Am Gestellrahmen ist schwenkbar ein großflächiger Träger befestigt, der Wickelkörper trägt, an denen Überlängen von Glasfaserleitungen abgelegt werden können.

Hinsichtlich weiteren Standes der Technik wird auf die DE 35 27 914 A1 sowie auf die US 5,715,348 verwiesen.

Aufgabe der Erfindung ist es daher, ein Schaltfeld zur Verbindung von Glasfaserkabeln bereitzustellen, das auch bei geringem Raumbedarf eine störungsfreie und übersichtliche Anordnung der Schaltkabel ermöglicht.

Erfindungsgemäß wird die Aufgabe durch ein Schaltfeld nach Anspruch 1 gelöst. Die weiteren Ansprüche betreffen vorteilhafte Ausgestaltungen der Erfindung.

Dies hat den Vorteil, dass keine zusätzliche Patchcord-Schublade nötig ist, da die Überschusslänge in der Höhe des eigentlichen Schaltfeldes aufgenommen ist.

Eine weitere vorteilhafte Ausgestaltung des erfindungsgemäßen Schaltfeldes ist dadurch gekennzeichnet, dass die Rangierführungen auf der linken Hälfte des Schaltfeldes zur Führung der Schaltkabel nach links, und die Rangierführungen auf der rechten Seite des Schaltfeldes zur Führung der Schaltkabel nach rechts ausgestaltet sind. Dies verbessert die Übersichtlichkeit der Verschaltung.

Eine weitere vorteilhafte Ausgestaltung des erfindungsgemäßen Schaltfeldes ist dadurch gekennzeichnet, dass zumindest eine Aufnahmekammer für die Überlänge der Schaltkabel an einer der Plattenelemente ausgebildet ist. Eine solche Aufnahmekammer schützt die empfindlichen Glasfaserelemente, beispielsweise vor mechanischen Beeinträchtigungen.

Eine weitere vorteilhafte Ausgestaltung des erfindungsgemäßen Schaltfeldes ist schließlich dadurch gekennzeichnet, dass der Schaltfeldrahmen einschließlich der Plattenelemente, der Umlenkelemente und der Aufnahmekammer in der Größe passend zum Einbau in einen Normschaltschrank, beispielsweise ein 19" Gestell mit standardisierten Höheneinheiten von 44,46 mm, ausgestaltet ist. Dies stellt die Kompatibilität des erfindungsgemäßen Schaltfeldes mit gängigen Bauelemente sicher.

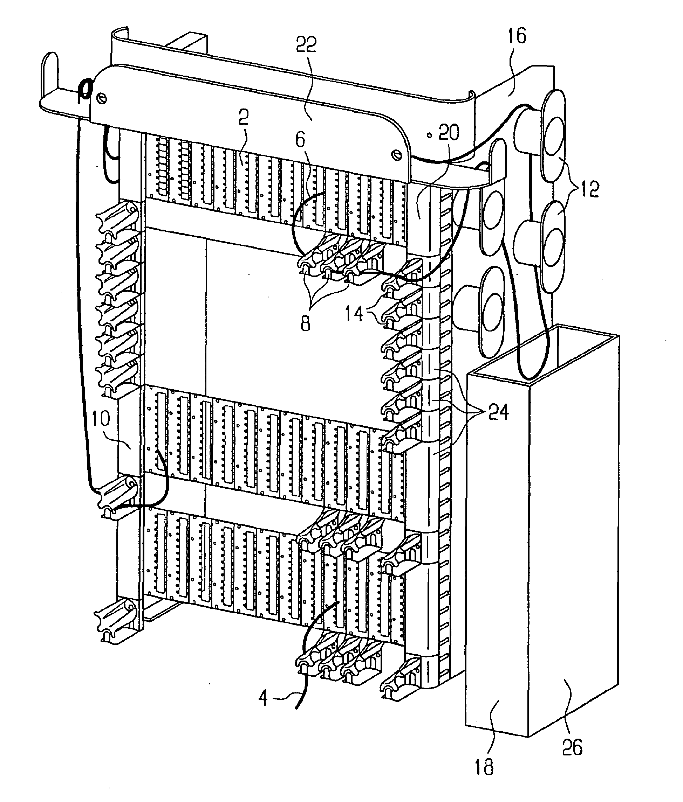

Ausführungsbeispiele der Erfindung werden nun unter Bezugnahme auf die beiliegende Figur 1 beschrieben, wobei weitere Aufgaben und Vorteile verdeutlicht werden.

Fig. 1 zeigt eine perspektivische Vorderansicht eines erfindungsgemäßen Schaltfelds.

Das in Fig. 1 gezeigte Schaltfeld weist einen Schaltfeldrahmen 10 auf, der in seinen Abmessungen zur Aufnahme in einen 19" Normschrank mit in der Höhe genormten Standardeinschüben von 44,46 mm ausgestaltet ist.

Eine Vielzahl von Kupplungen 2 sind auf dem Schaltfeldrahmen 10 ausgebildet. An diesen Kupplungen enden zum einen die von außen zugeführten, externen Glasfaserkabel 4. Von einer solchen Kupplung 2 ist in der Fig. 1 dargestellt, wie in dem Schaltfeldrahmen 10 ein Schaltkabel 6 nach unten weggeführt ist.

Obwohl nicht gezeigt, ist ein solches Rangierkabel bei jedem Kupplungselement vorgesehen, das mit einem externen Glasfaserkabel 4 in Verbindung steht.

Das gezeigte Glasfaserkabel-Schaltkabel 6 wird über eine Rangierführung beziehungsweise Faserführung 8 weitergeführt. Die gezeigte Rangierführung 8 führt das Glasfaserkabel-Schaltkabel 6 nach rechts, wobei darauf geachtet wird, dass der Mindestbiegeradius des Schaltkabels nicht unterschritten wird.

An einem der Seitenholme 20 des Schaltfeldrahmens 10 sind zweite Rangierführungen 14 vorgesehen. Diese Rangierführungen sind ausgestaltet, um ein Schaltkabel 6 aus der Ebene des Schaltfeldrahmens 10 heraus, nach unten zu führen. Wieder wird darauf geachtet, dass der Mindestbiegeradius des Schaltkabels 6 nicht unterschritten wird.

Auf der Seite des Schaltfeldrahmens 10 sind Umlenkelemente 12 ausgebildet. Das nach unten geführte Schaltkabel wird von den Umlenkelementen in Form einer Schleife an der Seite des Schaltfeldrahmens 10 und senkrecht zur Ebene des Schaltfeldrahmens 10 geführt.

Um die Verbindung der beiden Kupplungen 2 in dem Schaltfeld zu verwirklichen, wird das Schaltkabel 6 nach Durchlaufen der Schleife wieder über eine zweite Rangierführung 14 und eine erste Rangierführung 8 geführt und in der entsprechenden Gegenkupplung festgelegt.

Durch die gezeigte Führung des Schaltkabels können die unterschiedlichsten Überschusslängen der Schaltkabel sicher und übersichtlich an der Seite des Schaltfeldrahmens aufbewahrt werden.

Beispielsweise ist der gängige Mindestbiegeradius für ein Schaltkabel in der Größenordnung von 30 mm. Da zur Ausbildung einer Schleife des Schaltkabels der doppelte Radius berücksichtigt werden muss, kann das erfindungsgemäße Schaltfeld mit zwei Höheneinheiten von 24,45 mm ausgebildet werden.

Um die Übersichtlichkeit der Schaltung zu erhöhen, sind die ersten Rangierelemente 8 drehbar ausgestaltet. Dies ermöglicht es, die Schaltkabel 6 auf der linken Seite des Schaltfeldrahmens 10 nach links abzuführen, und die Schaltkabel 6 auf der rechten Seite des Schaltfeldrahmens 10 nach rechts abzuführen. Dies verbessert deutlich die Übersichtlichkeit der Schaltung.

Um Kupplungen auf entgegengesetzten Seiten des Schaltfeldrahmens miteinander zu verbinden, kann auf der Rückseite des Schaltfeldrahmens ein Kabelführungskanal 22 ausgebildet sein. Wie in der Figur gezeigt ist, sind in diesem Kanal die Kabel aufgenommen, die eine Kupplung 2 auf der rechten Seite des Schaltfeldes mit einer Kupplung 2 auf der linken Seite des Schaltfeldes verbinden.

Damit auch die Mindestbiegeradien der Abbiegung der Schaltkabel 6 hin zu den Umlenkelementen 12 eingehalten werden können, sind die zweiten Rangierführungen 14 genau auf den Seitenholmen des Schaltfeldrahmens 10 ausgebildet. Um eine Kollision mit möglichen angeschraubten Baugruppen zu vermeiden, und gleichzeitig die entsprechenden Mindestbiegeradien zu realisieren, kann eine Verkleidung 24 über diese Seitenholme gesetzt sein. Sie kann beispielsweise über Seitenflächen befestigt werden, wobei die Befestigung sowohl als Schraub- als auch als Schnappverbindung ausgelegt werden kann. Die Verkleidung 24 selbst kann als Metallbiegeteil, beispielsweise aus Aluminium, als Strangpressprofil aus Aluminium oder als Spritzgussteil aus Kunststoff ausgebildet sein.

Vorteilhaft ist es des Weiteren an dem Seitenholm 20 des Schaltfeldrahmens 10 Plattenelemente 16, etwa Seitenbleche, anzubringen. Diese Plattenelemente 16 dienen dann als Träger der Umlenkelemente 12. Entsprechend der gezeigten Ausführungsform sind vier Umlenkelemente 12 auf einem Plattenelement ausgebildet. Diese Umlenkelemente 12 ermöglichen es, das Schaltkabel als Schleife zu führen. Durch die Umlenkelemente 12 wird der Mindestbiegeradius sicher eingehalten, und eine große Anzahl von Schaltkabeln 6 können aufgenommen werden.

Um den Druck der oberen Schaltkabel 6 auf darunterliegende Schaltkabel 6 nicht zu hoch werden zu lassen, was zu einer unerwünschten Dämpfung innerhalb der Schaltkabel führen könnte, sind bei der gezeigten Ausführungsform die Schaltkabelstränge über mehrere Umlenkelemente 12 aufgeteilt. Dies erleichtert darüber hinaus die Identifizierung des Verlaufs der einzelnen Schaltkabel.

Bei der gezeigten Ausführungsform ist Des Weiteren eine Aufnahmekammer 18 vorgesehen. Diese Aufnahmekammer 18 ist auf dem Plattenelement 16 angebracht und nimmt die Schaltkabel 6 sicher auf. Auf diese Art wird ein Berührungsschutz der Schaltkabel 6 gewährleistet. Die Aufnahmekammer 18 selbst kann ein zusätzliches Element sein oder einstückig mit dem Plattenelement 16 ausgebildet werden. Vorzugsweise hat die Aufnahmekammer 18 leicht zu öffnende Abdeckelemente 26, um die darin enthaltenen Schaltkabel 6 im Servicefall, also beispielsweise bei einer Umschaltung an dem Schaltfeld mittels der Schaltkabel 6, einen leichten Zugriff auf die Schaltkabel 6 zu gewährleisten. Auf diese Art können die jeweils betroffenen Schaltkabel 6 leicht aus dem Strang aller anderen Schaltkabel 6 herausgenommen werden, ohne die anderen optisch zu beeinflussen, das heißt ohne ein Dämpfungserhöhung in den anderen Schaltkabel 6 entstehen zu lassen.

Das oben genannte Plattenelement 16 kann spiegelbildlich auch auf der gegenüberliegenden Seite des Schaltfeldrahmens vorgesehen sein. Allerdings sollte stets darauf geachtet werden, dass die Aufnahmekammern 18 im Servicefall leicht zugänglich sind.

Aufgrund der Unterbringung der Überlängen der einzelnen Schaltkabel 6 an der Seite des Schaltfeldrahmens 10 können die eingangs erwähnten Patchcord-Schubladen entfallen, was zu einer Erhöhung der Kapazität des gesamten Gestells führt.

Des Weiteren wurde die Erfindung im Zusammenhang mit einem 19" Gestell beschrieben. Auch hierauf ist die Erfindung nicht beschränkt, sondern kann auf beliebige andere Maße, je nach Erfordernis, abgewandelt werden.

## Patentansprüche

1. Schaltfeld zur Verbindung von Glasfaserkabeln mit einem Schaltfeldrahmen (10),mit einer Vielzahl von Kupplungen (2), die an dem Schaltfeldrahmen (10) befestigt sind, um ein externes Glasfaserkabel (4) mit einem Glasfaser-Schaltkabel (6) zu verbinden, und mit einer Vielzahl von auf einer Oberfläche des Schaltfeldrahmens (10) angebrachten Faserführungen für die Glasfaser-Schaltkabel (6), um die Glasfaser-Schaltkabel (6) zur Verbindung zwischen Kupplungen (2) zu führen,
**dadurch gekennzeichnet, dass**
a) erste Faserführungen (8) für die Glasfaser-Schaltkabel (6) auf der Oberfläche des Schaltfeldrahmens (10) oberhalb oder unterhalb von Kupplungen (2) angebracht sind, wobei die ersten Faserführungen (8) drehbar ausgestaltet sind und die Glasfaser-Schaltkabel (6) nach links oder nach rechts lenken,
b) zweite Faserführungen (14) für die Glasfaser-Schaltkabel (6) angebracht sind, nämlich an Seitenholmen (20) des Schaltfeldrahmens (10), die sich links oder rechts von Kupplungen (2) befinden, wobei die zweiten Faserführungen (14) die Glasfaser-Schaltkabel (6) nach oben oder unten lenken,
c) an mindestens einem Seitenholm (20) des Schaltfeldrahmens (10) ein als Träger von Umlenkelementen (12) dienendes Plattenelement (16) angebracht ist, wobei das oder jedes Plattenelement (16) senkrecht zur Ebene des Schaltfeldrahmens (10) steht,
d) die ersten Faserführungen (8), die zweiten Faserführungen (14) und die Umlenkelemente (12) derart zusammen wirken, dass ein Glasfaser-Schaltkabel (6) aus der Ebene des Schaltfeldrahmens (10) heraus in die senkrecht hierzu verlaufende Ebene eines Plattenelements (16) führbar ist, wobei eine Überschusslänge des Glasfaser-Schaltkabels (6) als Schleife an den Umlenkelementen (12) des Plattenelements (16) und damit seitlich neben und senkrecht zur Ebene des Schaltfeldrahmens (10) geführt werden kann.

2. Schaltfeld nach Anspruch 1,**dadurch gekennzeichnet, dass** alle ersten Faserführungen (8) für die Glasfaser-Schaltkabel (6) auf der linken Hälfte des Schaltfeldrahmens (10) zur Führung der Glasfaser-Schaltkabel (6) nach links ausgestaltet sind, und dass alle ersten Faserführungen (8) für die Glasfaser-Schaltkabel (6) auf der rechten Hälfte des Schaltfeldrahmens (10) zur Führung der Glasfaser-Schaltkabel (6) nach rechts ausgestaltet sind.

3. Schaltfeld nach Anspruch 1,**dadurch gekennzeichnet, dass** zumindest eine Aufnahmekammer (18) für Glasfaser-Schaltkabel (6) an einem der Plattenelemente (16) ausgebildet ist.

4. Schaltfeld nach Anspruch 3, **dadurch gekennzeichnet, dass** der Schaltfeldrahmen (10) einschließlich der Plattenelemente (16), der Umlenkelemente (12) und der Aufnahmekammer (18) in der Größe zum Einbau in einen Normalschaltschrank ausgestaltet ist.

## Claims

1. Switch panel for connecting glass fibre cables, having a switch-panel frame (10) with a large number of couplings (2) which are fixed to the switch-panel frame (10) in order to connect an external glass fibre cable (4) to a glass fibre connecting cable (6), and having a large number of fibre guides, which are provided on one surface of the switch-panel frame (10), for the glass fibre connecting cable (6) in order to guide the glass fibre connecting cables (6) for the purpose of connecting couplings (2), **characterized in that**
a) first fibre guides (8) for the glass fibre connecting cables (6) are provided on the surface of the switch-panel frame (10) above or below couplings (2), with the first fibre guides (8) being rotatable and directing the glass fibre connecting cables (6) to the left or to the right,
b) second fibre guides (14) are provided for the glass fibre connecting cables (6), specifically on side beams (20) of the switch-panel frame (10) which are positioned to the left or right of couplings (2), with the second fibre guides (14) directing the glass fibre connecting cables (6) upwards or downwards,
c) a plate element (16) which serves as a support for deflection elements (12) is provided on at least one side beam (20) of the switch-panel frame (10), with the or each plate element (16) being situated perpendicular to the plane of the switch-panel frame (10),
d) the first fibre guides (8), the second fibre guides (14) and the deflection elements (12) interact in such a way that a glass fibre connecting cable (6) can be guided out of the plane of the switch-panel frame (10) into the plane of a plate element (16) which runs perpendicular to the said plane of the switch-panel frame, it being possible for any excess length of the glass fibre connecting cable (6) to be guided in the form of a loop on the deflection elements (12) of the plate element (16) and therefore to the side of and perpendicular to the plane of the switch-panel frame (10).

2. Switch panel according to Claim 1, **characterized in that** all first fibre guides (8) for the glass fibre connecting cables (6) on the left-hand half of the switch-panel frame (10) are designed to guide the glass fibre connecting cables (6) to the left, and **in that** all first fibre guides (8) for the glass fibre connecting cables (6) on the right-hand half of the switch-panel frame (10) are designed to guide the glass fibre connecting cables (6) to the right.

3. Switch panel according to Claim 1, **characterized in that** at least one accommodation chamber (18) for glass fibre connecting cables (6) is formed on one of the plate elements (16).

4. Switch panel according to Claim 3, **characterized in that** the size of the switch-panel frame (10), including the plate elements (16), the deflection elements (12) and the accommodation chamber (18), is such that the switch panel can be installed in a standard switchgear cabinet.

## Revendications

1. Panneau de raccordement de câbles à fibres de verre, qui présente un cadre (10) de panneau de raccordement, plusieurs accouplements (2) fixés sur le cadre (10) du panneau de raccordement pour relier un câble externe (4) à fibres de verre à un câble (6) de raccordement à fibres de verre et plusieurs guides de fibres installés sur une surface du cadre (10) du panneau de raccordement pour les câbles (6) de raccordement à fibres de verre pour amener les câbles (6) de raccordement à fibres de verre à relier des accouplements (2),
**caractérisé en ce que**
a) des premiers guides de fibres (8) prévus pour les câbles (6) de raccordement à fibres de verre sont installés à la surface du cadre (10) du panneau de raccordement au-dessus ou en dessous d'accouplements (2), les premiers guides de câble (8) étant réalisés de manière à pouvoir tourner et déviant vers la gauche ou vers la droite les câbles (6) de raccordement à fibres de verre,
b) des deuxièmes guides de fibres (14) pour les câbles (6) de raccordement à fibres de verre sont installés sur des montants latéraux (20) du cadre (10) du panneau de raccordement, à gauche ou à droite des accouplements (2), les deuxièmes guides de fibres (14) déviant vers le haut ou vers le bas les câbles (6) de raccordement à fibres de verre,
c) un élément en plaque (16) qui sert de support pour les éléments de déviation (12) est installé sur au moins un montant latéral (20) du cadre (10) du panneau de raccordement, le ou chaque élément en plaque (16) étant disposés perpendiculairement au plan du cadre (10) du panneau de raccordement,
d) les premiers guides de câble (8), les deuxièmes guides de câble (14) et les éléments de déviation (12) coopèrent de telle sorte qu'un câble (6) de raccordement à fibres de verre peut être extrait du plan du cadre (10) du panneau de raccordement pour être amené dans le plan perpendiculaire d'un élément en plaque (16), l'excès de longueur du câble (6) de raccordement à fibres de verre pouvant être guidé en forme de boucle sur les éléments de déviation (12) de l'élément en plaque (16) et donc latéralement en dessous du plan du cadre (10) du panneau de raccordement et perpendiculairement à ce plan.

2. Panneau de raccordement selon la revendication 1, **caractérisé en ce que** tous les premiers guides de fibres (8) prévus pour les câbles (6) de raccordement à fibres de verre sont réalisés sur la moitié gauche du cadre (10) du panneau de raccordement pour guider les câbles (6) de raccordement à fibres de verre vers la gauche et **en ce que** tous les premiers guides de fibres (8) prévus pour les câbles (6) de raccordement à fibres de verre sont réalisés sur la moitié droite du cadre (10) du panneau de raccordement pour guider les câbles (6) de raccordement à fibres de verre vers la droite.

3. Panneau de raccordement selon la revendication 1, **caractérisé en ce qu'**au moins une chambre (18) de reprise des câbles (6) de raccordement à fibres de verre est formée sur l'un des éléments en plaque (16).

4. Panneau de raccordement selon la revendication 3, **caractérisé en ce que** le cadre (10) du panneau de raccordement avec les éléments en plaque (16), les éléments de déviation (12) et les chambres de reprise (18) sont réalisés à une taille qui permet de les monter dans une armoire de raccordement normalisée.
